# EUROPÄISCHE PATENTANMELDUNG

(11) **EP 4 292 482 A1**
(43) Veröffentlichungstag der Anmeldung: **20.12.2023**
(21) Anmeldenummer: 23168366.5
(22) Anmeldetag: 18.04.2023
(51) Int. Cl.: A47J 37/07

(54) **GRILLGERÄT**

(30) Priorität: 13.06.2022 DE 202022103305 U
(71) Anmelder: Enders Colsman AG, 58791 Werdohl (DE)
(72) Erfinder: Colsman, Robin, 44139 Dortmund (DE); Gloger, Michael, 58791 Werdohl (DE)
(74) Vertreter: Haverkamp Patentanwälte PartG mbB

(57) **Zusammenfassung**

Offenbart ist ein Grillgerät 1 mit einer Garfläche, mit zumindest einer unterhalb der Garfläche angeordneten Wärmequelle 3 und mit einer oberhalb der Garfläche angeordneten, als Infrarotstrahler ausgelegten, in unterschiedliche Stellungen verstellbaren oberen, als Flächenheizer ausgelegte Wärmequelle 11, deren Wärmeabstrahlfläche 15 kleiner ist als die Garfläche, von welchen Stellungen der oberen Wärmequelle 11 in einer ersten Abstrahlstellung die Wärmeabstrahlrichtung zur Oberseite der Garfläche zum Erwärmen einen Lebensmittels mit Oberhitze und in einer zweiten Abstrahlstellung in Richtung der flächigen Erstreckung der Garfläche zum Erwärmen eines Lebensmittels aus einer seitlichen Richtung gerichtet ist, wobei zur Verstellung der oberen Wärmequelle 11 zwischen den beiden Abstrahlstellungen diese um eine horizontale Schwenkachse 14 verschwenkbar am Grillgerät 1 gehalten ist, welche Verschwenkbarkeit eingerichtet ist, damit infolge einer Verschwenkung der oberen Wärmequelle 11 sowohl ihre Wärmeabstrahlrichtung als auch ihr Abstand zur Garfläche geändert wird.

## Beschreibung

Die Erfindung betrifft ein Grillgerät mit einer Garfläche, mit zumindest einer unterhalb der Garfläche angeordneten Wärmequelle und mit einer oberhalb der Garfläche angeordneten, als Infrarotstrahler ausgelegten, in unterschiedliche Stellungen verstellbaren oberen, als Flächenheizer ausgelegte Wärmequelle, deren Wärmeabstrahlfläche kleiner ist als die Garfläche, von welchen Stellungen der oberen Wärmequelle in einer ersten Abstrahlstellung die Wärmeabstrahlrichtung zur Oberseite der Garfläche zum Erwärmen eines Lebensmittels mit Oberhitze und in einer zweiten Abstrahlstellung in Richtung der flächigen Erstreckung der Garfläche zum Erwärmen eines Lebensmittels aus einer seitlichen Richtung gerichtet ist.

Bei einem derartigen Grillgerät befindet sich unterhalb der Grill- bzw. Garfläche ein Brenner als Wärmequelle zum Erwärmen von auf der Grillfläche befindlichen Lebensmitteln. Die Garfläche selbst wird typischerweise durch einen Rost bereitgestellt. Mit derartigen Grillgeräten, deren untere Wärmequelle eine gasbetriebene oder eine elektrische Wärmequelle oder auch eine durch Verbrennen von Kohle bereitgestellte Wärmequelle sein kann, wird das auf der Garfläche befindliche Gut gegrillt. Gasgrillgeräte verfügen typischerweise über Brennerrohre, die unterhalb der Grillfläche angeordnet sind, als untere Wärmequelle.

Mitunter besteht bei derartigen Grillgeräten auch die Möglichkeit, an den beiden einander gegenüberliegenden Querseitenwänden einen typischerweise elektromotorisch angetriebenen Drehspieß zu befestigen. Bei einer solchen Verwendung des Grillgerätes wird man unterhalb des an dem Drehspieß befindlichen Lebensmittels eine Auffangschale oder eine Auffangwanne zum Auffangen von von dem Lebensmittel herabtropfenden Garflüssigkeiten positionieren. Herabtropfende Flüssigkeiten sollen das oder die unterhalb der Garfläche befindlichen Brennerrohre nicht verunreinigen. Aus diesem Grunde ist bei Verwendung einer gasbetriebenen unteren Wärmequelle eine Erwärmung eines an einem Drehspieß befindlichen Lebensmittels mit den üblichen, unterhalb des Rostes befindlichen Brennerrohren nicht möglich. Bei einer solchen Gasgrillausgestaltung verfügt dieser über einen Rückenbrenner, oftmals auch als Back- oder Sideburner angesprochen. Dieser ist an die Rückwand eines den Garraum einfassenden Gehäuses angeschlossen und damit seitlich bezüglich des Garraumes positioniert. Damit befindet sich der Rückenbrenner seitlich in Bezug auf einen Drehspieß, sodass die dem Lebensmittel zugeführte Wärme von der Rückseite der Grillkammer aus her zugeführt wird und damit aus einer anderen Richtung als von unten. Mit einem solchen Rückenbrenner können an einem Drehspieß gehaltene Lebensmittel gegart werden, ohne dass Flüssigkeiten auf den Rückenbrenner herabtropfen können.

Ein Grillgerät dieser Art ist aus DE 20 2019 104 770 U1 bekannt. Bei diesem vorbekanntem Grillgerät, welches als Gasgrillgerät ausgeführt ist, ist die obere Wärmequelle als gasbetriebene Wärmequelle konzipiert, bei dem die aus einem Brennerrohr austretenden Flammen bei einem Betrieb einen Rotglühkörper mit einer flächigen Erstreckung beaufschlagen. Dieser ist mit zumindest einem Abschnitt in seiner vertikalen Erstreckung seiner Oberfläche so angeordnet, dass diese Oberfläche bei einem Betrieb dieser Wärmequelle von den von diesem erzeugten Flammen beaufschlagt oder zumindest von den aufsteigenden heißen Abgasen angeströmt ist. Bei diesem vorbekannten Gasgrillgerät ist ein ortsfestes Brennerrohr vorgesehen. Der Rotglühkörper kann bezüglich der Abstrahlrichtung der Wärme in gewissen engen Grenzen beeinflusst werden. Die in diesem Stand der Technik beschriebene obere Wärmequelle wird eingesetzt, wenn mit dem Grillgerät ein Drehspieß gegart werden soll.

Die Verstellbarkeit des Rotglühkörpers ist beschränkt, da dieser zu seinem Betrieb an seiner zur Grillfläche weisenden Oberfläche von den Flammen des Brennerrohrs beaufschlagt oder von den austretenden heißen Abgasen angeströmt sein muss.

Ein weiteres Grillgerät, welches neben einer unterhalb der Grill- bzw. Garfläche angeordneten Wärmequelle über eine obere Wärmequelle verfügt, ist aus DE 10 2017 220 645 A1 bekannt. Auch dieses Grillgerät kann als Gasgrillgerät ausgeführt sein. Die obere Wärmequelle dient als Oberhitze-Wärmequelle und ist als Hochtemperatur-Wärmequelle ausgeführt. Mit dieser soll die Funktion eines sogenannten "Beefers", das heißt: Das Grillen eines Steaks von oben mit hoher Temperatur bereitgestellt werden. In Folge der hierdurch bewirkten Oberhitzeerwärmung kann diese obere Wärmequelle auch als Topburner angesprochen werden. Die Oberhitze-Wärmequelle befindet sich an einem Arm, mit dem diese verschwenkt werden kann, um den Abstand zu einem mit Oberhitze zu garendem Lebensmittel einstellen zu können. Auf Grund des die Oberhitze-Wärmequelle haltenden Arms befindet sich diese in Abhängigkeit von ihrer Höheneinrichtung oberhalb unterschiedlicher Bereiche der Garfläche. Die obere Wärmequelle selbst ist um eine horizontale Achse schwenkbar an Schwenkarme angeschlossen, damit ihre Wärmeabstrahlrichtung immer von oben auf die Garfläche bzw. auf ein darauf befindliches Lebensmittel gerichtet ist.

Aus EP 3 881 735 A1 ist ein weiteres Grillgerät bekannt, bei dem eine obere, als IR-Strahler ausgeführte Wärmequelle an der Rückwand des Grillgerätes gehalten ist. Gegenüber der Rückwand ist diese Wärmequelle in vertikaler Richtung translatorisch verstellbar, um auf diese Weise den Abstand der oberen Wärmequelle von der Garfläche einrichten zu können. Ferner ist die obere Wärmequelle verschwenkbar, um in der einen Stellung eine Wärmeabstrahlung von oben auf die Garfläche und in einer zweiten Stellung in der ebenen Erstreckung der Garfläche zu ermöglichen. Diese obere Wärmequelle kann somit als Topburner ebenso eingesetzt werden wie als Back- bzw. Sideburner.

Ausgehend von dem vorstehend beschriebenen Stand der Technik liegt der Erfindung die Aufgabe zugrunde, ein Grillgerät mit einer oberen, insbesondere auch als IR-Strahler auslegbaren Wärmequelle, die zum Bewirken unterschiedlicher Wärmeabstrahlrichtungen verstellt werden kann, vorzuschlagen, bei dem eine Verstellbarkeit zum Nutzen der oberen Wärmequelle als Top- und als Sideburner möglich ist, ein solches Grillgerät jedoch mechanisch einfacher aufgebaut und dadurch verlässlich und kostengünstig ist.

Gelöst wird diese Aufgabe erfindungsgemäß durch ein eingangs genanntes, gattungsgemäßes Grillgerät, bei dem zur Verstellung der oberen Wärmequelle zwischen den beiden Abstrahlstellungen diese um eine horizontale Schwenkachse verschwenkbar am Grillgerät gehalten ist, welche Verschwenkbarkeit eingerichtet ist, damit infolge einer Verschwenkung der oberen Wärmequelle sowohl ihre Wärmeabstrahlrichtung als auch ihr Abstand zur Garfläche geändert wird.

Bei diesem Grillgerät ist die obere Wärmequelle um eine horizontale Schwenkachse verschwenkbar angeordnet. Die Besonderheit bei der verschwenkbaren Anlenkung der oberen Wärmequelle bei diesem Grillgerät ist, dass eine Verschwenkbarkeit derselben sowohl eine Änderung der Abstrahlrichtung der von der oberen Wärmequelle produzierten Wärme und zugleich eine Änderung hinsichtlich der Höheneinrichtung der Wärmeabstrahlfläche, also: hinsichtlich ihres Abstandes zur Garfläche bewirkt. Aufgrund dieser Verschwenkbarkeit ist der Abstand der Wärmeabstrahlfläche der oberen Wärmequelle zur Garfläche bzw. einem darauf befindlichen Lebensmittel in der aufgeschwenkten Stellung der oberen Wärmequelle als Sideburner größer als in seiner gegenüber dieser Stellung verschwenkten und abgesenkten Topburner-Stellung. Erreichen lässt sich dieses beispielsweise dadurch, dass an die Wärmequelle bzw. ihr Gehäuse Schwenkarme angeschlossen sind, deren der Wärmequelle gegenüberliegende Enden bzw. Endabschnitte an die Schwenkachse bereitstellenden Lagerelemente angeschlossen sind. Damit ist die Wärmequelle mit ihrer Wärmeabstrahlfläche von der Schwenkachse beabstandet. Vorteilhaft bei dieser Auslegung der oberen Wärmequelle ist, dass in ihrer ersten Stellung, in der diese Wärme in Richtung zur Garfläche emittiert, der durch die obere Wärmequelle erwärmte Bereich auf der Garfläche sich nicht im unmittelbaren Randbereich derselben, sondern mit Abstand zu dieser befindet. Erreicht werden kann dieses auch durch eine gekrümmte Kulissenführung, in der die obere Wärmequelle aus ihrer ersten Abstrahlstellung in ihre zweite Abstrahlstellung verschoben wird, wobei ein Verschieben der oberen Wärmequelle in dieser Führungskulisse ein Verschwenken derselben um eine horizontale Schwenkachse zur Folge hat.

Die beanspruchte Konzeption der Aufhängung der oberen Wärmequelle hat zum Vorteil, dass ein auf der Garfläche, typischerweise bereitgestellt durch einen Rost, zu garendes Lebensmittel nicht nur eine intensive Erwärmung von oben sondern auch von unten erfahren kann. Typischerweise ist die Gartemperatur im Randbereich einer Garfläche geringer als in den unmittelbar oberhalb der unteren Wärmequelle befindlichen Bereichen der zentraleren Garflächenbereiche. Die Folge ist, dass mit dem erfindungsgemäßen Grillgerät ein zu garendes Lebensmittel, beispielsweise ein Steak auch beidseitig über seine Fläche mit jeweils einheitlicher Temperatur gegart werden kann. In dieser Stellung kann die obere Wärmequelle, wenn mit entsprechender Leistung und vorzugsweise als IR-Strahler ausgelegt, was die Regel sein dürfte, als sogenannter Beefer genutzt werden. Der Abstand der oberen Wärmequelle von der Oberseite der Garfläche ist in ihrer Topburner-Abstrahlstellung hinreichend groß, damit beispielsweise auch ein dicker geschnittenes Steak in den Zwischenraum zwischen der Wärmeabstrahlfläche der oberen Wärmequelle und der Garfläche passt und die obere Wärmequelle von einem solchen Steak noch einen gewissen Abstand hat. Da die obere Wärmequelle typischerweise als IR-Strahler (Infrarot-Strahler) ausgelegt ist, werden keine Einbußen hingenommen, wenn in dieser Stellung der obere Wärmequelle ein dünner geschnittenes Steak gegart werden soll, da der Wärmeverlust der IR-Strahlung über den dann etwas größeren Abstand des Steaks zur oberen Wärmequelle keine nennenswerten Einbuße in der Temperatur der auf ein solches Lebensmittel auftreffenden Wärmestrahlung hat. Dieses wird als signifikanter Vorteil gegenüber Kontaktgrillgeräten angesehen. Selbstverständlich ist es auch möglich, zum Reduzieren des Abstandes der Wärmeabstrahlfläche der oberen Wärmequelle zu dem Lebensmittel in seiner Topburner-Stellung das Lebensmittel auf einen Grill- bzw. Garaufsatz aufzulegen. Ein solcher Aufsatz kann auf der Garfläche aufgestellt sein. Möglich ist es auch, dass ein solcher Aufsatz an Schienen der Garfläche geführt ist. Dann kann das zu erwärmende Lebensmittel unter die in ihrer Topburner-Stellung befindliche obere Wärmequelle geschoben und nach Abschluss des Garvorganges wieder zur erleichterten Entnahme hervorgezogen werden.

In einer zweiten Abstrahlstellung der oberen Wärmequelle verläuft die Abstrahlrichtung typischerweise etwa parallel zur Ebene der flächigen Erstreckung der Garfläche. Die obere Wärmequelle befindet sich dann in ihrer aufgerichteten SideburnerStellung. In dieser Stellung kann die obere Wärmequelle zum seitlichen Erwärmen eines üblicherweise voluminöseren Lebensmittels, beispielsweise eines an einem Drehspieß gehaltenen Lebensmittels dienen. Die Beabstandung der Wärmeabstrahlfläche der oberen Wärmequelle von ihrer Schwenkachse bedingt, dass sich die obere Wärmequelle in ihrer zweiten Abstrahlstellung - einer Sideburner-Stellung - mit einem größeren Abstand oberhalb der Garfläche befindet. Die Schwenkachse der oberen Wärmequelle kann beispielsweise in einem Abstand zur Garfläche dergestalt angeordnet sein, dass die obere Wärmequelle in ihrer Sideburner-Stellung mit ihrem mittlerem Abschnitt in Bezug auf die vertikale Erstreckung der Abstrahlfläche sich etwa in Höhe einer Seitenwand des Grillgerätes angeordneten Lageröffnung befindet, in der ein Drehspieß gelagert werden kann.

Die obere Wärmequelle kann durchaus auch in Zwischenstellungen zwischen der ersten Abstrahlstellung und der zweiten Abstrahlstellung fixiert werden. Die Wärmeabstrahlrichtung ist dann entsprechend der Neigung schräg von oben auf die Garfläche bzw. auf ein darauf befindliches Lebensmittel gerichtet.

In einer möglichen Ausgestaltung ist die obere Wärmequelle mit ihren Schwenkarmen gegenüber den übrigen Bestandteilen des Grillgeräts, insbesondere der Garfläche lediglich verschwenkbar. Dieses ist vorteilhaft im Hinblick auf eine Zuführung des Energieträgers, also: der zum Betrieb der oberen Wärmequelle benötigten Energie, sei es elektrische Energie oder Gas. Ist die obere Wärmequelle gasbetrieben, bräuchte dann nur eine einzige Drehdurchführung bereitgestellt zu werden. Diese kann mit Abstand zu der Wärmeabstrahlfläche der oberen Wärmequelle angeordnet werden und braucht daher, was vor allem für Dichtungen relevant ist, nicht übermäßig temperaturbeständig zu sein. Möglich ist es aber bei einer solchen Ausgestaltung des Grillgerätes auch, eine Gaszufuhr an die obere Wärmequelle ohne Drehdurchführung zu realisieren, und zwar indem ein endseitig offenes Mischrohr vorgesehen ist, in welches über eine Düse das Brenngas eingespeist wird und über die zudem die für den Verbrennungsprozess benötigte Luft bzw. der darin enthaltene Sauerstoff eingesaugt werden. Das Mischrohr umfasst einen Mischrohrabschnitt mit seiner Eingangsöffnung, dessen Längsachse vorzugsweise mit der Schwenkachse der oberen Wärmequelle fluchtet oder nur geringfügig zu dieser versetzt ist. Der Ausgang der Brenngasdüse ist in die Eingangsmündung des Mischrohrs gerichtet und befindet sich typischerweise bereits innerhalb des Eingangsbereiches des Mischrohres.

Ohne den konstruktiven Aufwand nennenswert zu erhöhen, kann die Lagerung der Schwenkachse der oberen Wärmequelle gegenüber der Garfläche auch höhenverstellbar ausgelegt sein, beispielsweise in einer in die Seitenwände des Grillgerätes eingebrachten, sich in vertikaler Richtung erstreckenden Führungskulisse. Hierdurch werden die Einrichtungsmöglichkeiten der oberen Wärmequelle erhöht.

In einer möglichen Ausgestaltung einer Schewenklagerung der oberen Wärmequelle verfügt diese über zwei Lagerzapfen, die jeweils in einer Seitenwand des Grillgerätes gelagert sind. Die Lagerzapfen selbst können die Endabschnitte einer sich über die gesamte Breite des Grillgerätes und durch die Seitenwände hindurch erstreckenden Lagerstange sein. Zur Energiezufuhr ist gemäß einer Ausgestaltung einer der Lagerzapfen zumindest teilweise als Hohlkanal ausgeführt. Durch diesen kann bei einer Auslegung der oberen Wärmequelle als elektrischer IR-Strahler ein durch das Anschlusskabel oder, für den Fall, dass die obere Wärmequelle als gasbetriebener IR-Strahler ausgelegt ist, in einfacher Weise ein Gasanschluss realisiert werden.

Es gibt verschiedene Möglichkeiten, die obere Wärmequelle bezüglich ihrer Verstellmechanik auszulegen. Beispielsweise kann an einer Stirnseite des Gehäuses der oberen Wärmequelle ein Griff angeordnet sein. Gemäß einer anderen Ausgestaltung ist vorgesehen, dass einer der Lagerzapfen eine Seitenwand durchgreift und außenseitig zur Seitenwand an den Lagerzapfen bzw. die Schwenkachse ein Stellhebel drehmomentschlüssig angeschlossen ist. Vorteilhaft ist bei einer solchen Auslegung, dass dann die Verstellhandhabe zum Verstellen der oberen Wärmequelle außerhalb des Garraumes angeordnet ist und daher auch bei einem Betrieb sämtlicher Wärmequellen des Grillgerätes infolge der thermischen Trennung durch die Seitenwand nicht nennenswert erwärmt und daher ohne Weiteres auch bei einem Betrieb des Grillgerätes gehandhabt werden kann.

Die flächige Ausdehnung der Wärmeabstrahlfläche der oberen Wärmequelle kann sich grundsätzlich über die gesamte Nutzbreite der Garfläche erstrecken. In einer vorteilhaften Ausgestaltung ist allerdings vorgesehen, dass sich die obere Wärmequelle nur über einen Abschnitt der Nutzbreite der Garfläche erstreckt, beispielsweise über 70 % bis 80 % der Nutzbreite, wobei bei einer solchen Ausgestaltung die obere Wärmequelle vorzugsweise unmittelbar benachbart zu einem seitlichen Abschluss der Garfläche angeordnet ist. Dann befindet sich der durch die Topburner-Stellung der oberen Wärmequelle nicht wärmebestrahlte Bereich der Garfläche insgesamt zu einer Seite derselben und kann als Warmhaltebereich genutzt werden. Hinsichtlich der Tiefe der Garfläche bedeckt die obere Wärmequelle in ihrer als Top-Burner genutzten Abstrahlstellung hingegen nur einen Teil der Garfläche. Ist das Grillgerät als Gasgrillgerät ausgelegt, verfügt dieses typischerweise über mehrere quer zur Breite der Bedienseite des Grillgerätes sich erstreckende Brennerrohre als untere Wärmequelle. Diese sind typischerweise unabhängig voneinander betätigbar. Neben derartigen Brennerrohren kann ein solches Grillgerät auch über einen sogenannten Kochstellenbrenner verfügen. Bei einer Auslegung der oberen Wärmequelle, wie vorstehend skizziert, erstreckt sich diese sodann quer zur Längserstreckung der Brennerrohre und überspannt mehrere der Brennerrohre und, wenn gewünscht, auch den Kochstellenbrenner.

Die Schwenkachse der oberen Wärmequelle befindet sich, wenn in die Ebene der Garfläche projiziert, typischerweise benachbart zu dem Randbereich der Garfläche und somit außerhalb der Garfläche oder auch in dem Randbereich der Garfläche. Bei einer Auslegung des Grillgerätes, bei der sich die Schwenkachse der oberen Wärmequelle benachbart zu dem Randbereich der Garfläche befindet, typischerweise benachbart zu dem der Bedienseite des Grillgerätes gegenüberliegenden rückwärtigen Abschluss der Garfläche, ist eine Ausgestaltung möglich, bei der der Garraum durch eine Rückwand begrenzt ist und sich die Schwenkarme der oberen Wärmequelle durch die Rückwand hindurch erstrecken. Der für eine Verschwenkung erforderliche gelenkige Anschluss der oberen Wärmequelle an das Grillgerät erfolgt dann außerhalb des Garraumes und unterliegt aus diesem Grunde auch keiner Verschmutzungsgefahr, etwa durch Grillflüssigkeiten. Zudem erlaubt dieses eine mechanische Ansteuerung der oberen Wärmequelle, die sich ebenfalls außerhalb der Garkammer befindet. Als Stellmechanismus kann ein mechanischer Verstellmechanismus zum Verschwenken der oberen Wärmequelle zwischen ihren möglichen Stellungen vorgesehen sein. Typischerweise ist ein solches Grillgerät eingerichtet, damit die obere Wärmequelle auch in Zwischenstellungen zwischen den beiden Abstrahlendstellungen fixiert werden kann. Gemäß einer Ausgestaltung ist vorgesehen, dass der Verstellmechanismus ein über eine Gelenkkette an einen Schwenk- bzw. Hebelarm der oberen Wärmequelle angeschlossenen Bedienhebel umfasst. Eine Verstellung des Bedienhebels bewirkt somit eine Verschwenkung der oberen Wärmequelle. Eine solche Gelenkkette kann neben dem Bedienhebel, der typischerweise ein erster Arm eines zweiarmigen Hebels ist, einen daran mit seinem einen Ende angeschlossenen Lenker umfassen, der mit seinem anderen Ende an einen Schwenkarm bzw. Schwenkarmhebel oder einen Stellfortsatz der oberen Wärmequelle angeschlossen ist. Die Hebelachse des Bedienhebels verläuft vorzugsweise in horizontaler Richtung und zwar parallel zur Schwenkachse der oberen Wärmequelle. Der zweiarmige Hebel, dessen einer Arm der Bedienhebel ist, welcher typischerweise mit einem Handhabungsgriff endseitig ausgerüstet ist, kann bezüglich seiner Teilung und damit der Anordnung seiner Hebelachse ausgelegt sein, damit mit relativ geringer Kraftaufwendung bei einer Bedienung des Bedienhebels die obere Wärmequelle verschwenkt werden kann.

In einer vorteilhaften Weiterbildung eines solchen Verstellmechanismus ist vorgesehen, dass eine Absenkbewegung der oberen Wärmequelle aus ihrer Stellung zum Erwärmen eines Lebensmittels aus seitlicher Richtung, in Richtung ihrer Oberhitzestellung gegen die Rückstellkraft eines oder mehrerer Kraftspeicherelemente erfolgt. Diese Kraftspeicherelemente werden durch die Gewichtskraft der oberen Wärmequelle in Folge ihrer Verschwenkbarkeit in dieser Richtung vorgespannt. Vorzugsweise werden hierzu ein oder mehrere Zugspiralfedern verwendet, die zum einen an eine der oberen Wärmequelle bezüglich ihrer Schwenkachse gegenüberliegenden Zugfederfortsatz und mit ihrem anderen Ende grillgeräteseitig angeschlossen sind. Die Absenkbewegung der oberen Wärmequelle in Richtung ihrer Topburner-Stellung ist somit durch das oder die Kraftspeicherelemente gedämpft. Entsprechend geringer ist demensprechend auch der Kraftaufwand, wenn die obere Wärmequelle in die entgegengesetzte Richtung verstellt werden soll, da eine Verstellung der oberen Wärmequelle in dieser Richtung durch die in dem oder den Kraftspeicherelementen gespeicherte Rückstellkraft unterstützt ist.

In aller Regel wird man die obere Wärmequelle mit ihrer Längserstreckung in Richtung der Breite des Grillgerätes anordnen. Verfügt ein solches Grillgerät über eine Rückwand, ist die obere Wärmequelle in Bezug auf ihre Längserstreckung bzw. Langachse dem Verlauf der Rückwand folgend angeordnet.

Die Verschwenkendstellungen der oberen Wärmequelle können anschlagbegrenzt sein. Ist eine zusätzliche oder anderweitige Sicherung vorgesehen, kann diese dadurch bereitgestellt werden, dass als Sicherungselement ein Arretierbolzen vorgesehen ist. Mit Abstand zur Schwenkachse befinden sich in einer Seitenwand ein oder mehrere Arretierdurchbrechungen, durch die der Arretierbolzen mit seinem Verriegungsabschnitt durchgeführt werden kann. Die obere Wärmequelle verfügt über eine Arretierfalle, in die zu ihrer Arretierung das freie Ende des Arretierbolzens eintaucht. Die obere Wärmequelle ist dann über den Arretierbolzen an derjenigen Seitenwand arretiert, die der Arretierbolzen durchgreift. Ein solcher Arretierbolzen kann an seinem außerhalb der Seitenwand befindlichen Endabschnitt eine Handhabe aufweisen, beispielsweise eine Grifföse, um diesen in einfacher Weise manuell handhaben zu können. Sind mehrere Arretierdurchbrechungen in der Seitenwand vorgesehen, erstrecken sich diese mit Abstand zur Schwenkachse entlang eines Bogensegmentes. Auch kann vorgesehen sein, dass der Arretierbolzen in einer einzigen Arretierdurchbrechung in einer Seitenwand des Grillgerätes gehalten ist und die obere Wärmequelle mehrere mit entsprechendem Abstand zur Schwenkachse in einem Bogensegment angeordnete Arretierfallen aufweist. Eine Schwenkverstellung der oberen Wärmequelle ist möglich, wenn der Arretierbolzen mit seinem in eine Arretierfalle eingreifenden Endabschnitt aus dieser herausgezogen worden ist. Gemäß einer Ausgestaltung ist vorgesehen, dass unabhängig von der konkreten Auslegung der Arregierung ein solcher Arretierbolzen federbelastet mit seinem Endabschnitt in einer Arretierfalle eingreift. Dies erhöht die Verriegelungssicherheit.

Bei einer Ausgestaltung des Grillgerätes mit einem mechanischen Verstellmechanismus unter Verwendung eines Bedienhebels kann eine Festlegung der gewünschten Stellung der oberen Wärmequelle durch eine Rastkulisse mit Rastausnehmungen erfolgen, in die der Bedienhebel in der jeweils gewünschten Stellung eingreift. Dann sind Anschläge zum Definieren der Endstellungen nicht notwendigerweise erforderlich. Möglich ist ebenfalls eine Ausgestaltung, bei der die Endstellungen der oberen Wärmequelle anschlagbegrenzt sind, jedoch Zwischenstellungen durch eine von dem Bedienhebel durchgriffene, mit Verriegelungsvertiefungen ausgerüstete Rastkulisse definiert sind.

Eine Verstellung der oberen Wärmequelle ist durchaus auch elektromotorisch möglich.

Nachfolgend ist die Erfindung anhand eines Ausführungsbeispiels unter Bezugnahme auf die beigefügten Figuren beschrieben: Es zeigen:
- **Fig. 1:**: Eine schematisierte Querschnittsdarstellung eines Gasgrillgerätes mit einer oberen Wärmequelle in einer ersten Wärmeabstrahlstellung
- **Fig. 2:**: eine schematisierte Querschnittsdarstellung eines Gasgrillgerätes mit einer oberen Wärmequelle in einer zweiten Wärmeabstrahlstellung,
- **Fig. 3:**: eine perspektivische Ansicht eines um einige für die Erläuterung der Erfindung nicht relevante Bestandteile ausgeblendeten Grillgerätes mit ihrer oberen Wärmequelle in einer ersten Wärmeabstrahlstellung,
- **Fig. 3a:**: eine Detaildarstellung einer Rastfixierung für unterschiedliche Stellungen der oberen Wärmequelle,
- **Fig. 4:**: eine Seitenansicht der rechten Seite des Grillgerätes der Figur 3 mit ausgeblendetem Seitenteil,
- **Fig. 5:**: eine Rückseitenansicht des Grillgerätes der Figur 4 mit ausgeblendeter Rückwand,
- **Fig. 6:**: das Grillgerät der Figur 1 mit seiner oberen Wärmequelle in einer zweiten Wärmeabstrahlstellung und
- **Fig. 6a:**: eine Detaildarstellung der Rastfixierung der oberen Wärmequelle in ihrer in Figur 6 gezeigten Stellung.

Ein Grillgerät 1 ist als Gasgerät ausgelegt. Gezeigt ist in den Figuren lediglich das Grillgerät 1, und zwar ohne einen Unterbau. Das Grillgerät 1 verfügt über eine Wanne 2, in der mehrere, parallel zueinander angeordnete Brennerrohre 3 als Stabbrenner angeordnet sind. Eines dieser Brennerrohre ist in den Figuren gezeigt. Die Brennerrohre 3 sind in nicht näher dargestellter Art und Weise an eine typischerweise in dem nicht dargestellten Unterbau angeordneten Gasflasche angeschlossen. Die Bedienseite des Grillgerätes 1 ist mit dem Bezugszeichen 4 kenntlich gemacht. An der Bedienseite der Wanne 2 befinden sich mehrere Gasventile, wobei jeweils ein Gasventil zum unabhängigen Betätigen der Brennerrohre 3 jeweils einem Brennerrohr 3 zugeordnet ist. Jedes Gasventil kann mit einem Drehsteller 5 betätigt werden. In den Figuren sind lediglich die Drehsteller 5 eines solchen Gasventils dargestellt.

Die Wanne 2 ist oberseitig durch einen offenen Rost 6 abgeschlossen. Die Oberseite des Rostes 6 stellt die Garfläche des Grillgerätes 1 dar. Die Garfläche bildet bei dem Grillgerät 1 den unteren Abschluss eines Garraumes 7. Dieser ist seitlich durch jeweils eine Seitenwand 8 begrenzt. Aufgrund der Querschnittsdarstellung des Grillgerätes 1 in den Figuren ist lediglich eine Seitenwand 8 erkennbar. Die beiden Seitenwände sind an der der Bedienseite 4 gegenüberliegende Seite durch eine Rückwand 9 miteinander verbunden. Die Seitenwand 8 verfügt über eine Lageröffnung 10, in die ein Endabschnitt eines Drehspießes zu seiner Lagerung einsteckbar ist. Die in den Figuren nicht gezeigte zweite Seitenwand verfügt an entsprechend gleicher Stelle über eine U-förmige Ausnehmung, deren unterer Abschluss mit der Lageröffnung 10 in horizontaler Richtung fluchtet. In dieser Ausnehmung ist der Drehspieß mit seiner anderen Lagerstelle einsetzbar.

Bei dem Grillgerät 1 bilden die Brennerrohre 3 untere Wärmequellen, mit denen bei einem Betrieb derselben ein auf dem Rost 6 aufliegendes oder darüber gehaltenes Lebensmittel von unten erwärmbar ist. Neben diesen unteren Wärmequellen verfügt das Grillgerät 1 auch über eine obere Wärmequelle 11. Diese ist bei dem dargestellten Ausführungsbeispiel ebenfalls gasbetrieben und als IR-Strahler ausgelegt. Die obere Wärmequelle 11 verfügt über ein Brennergehäuse 12. Die Wärmeabstrahlfläche ist durch ein Metallgestrick bei diesem Ausführungsbeispiel bereitgestellt. Durch Verbrennen von Gas wird dieses erwärmt und ist daher als IR-Strahler anzusprechen. Die maximal erzeugbaren Temperaturen liegen bei 700 bis 800 °C. Teil der oberen Wärmequelle 11 sind zwei Schwenkarme 13, von denen aufgrund der Schnittdarstellung nur ein Schwenkarm 13 erkennbar ist. Die Schwenkarme 13 sind an das Brennergehäuse 12 angeschlossen. Die Schwenkarme 13 sind mittels einer Lagerstange 14 in den beiden Seitenteilen 8 um eine horizontale Schwenkachse schwenkbar gehalten. Durch die Schwenkarme 13 ist das Brennergehäuse 12 mit seiner Wärmeabstrahlfläche 15 von der Schwenkachse 14 beabstandet.

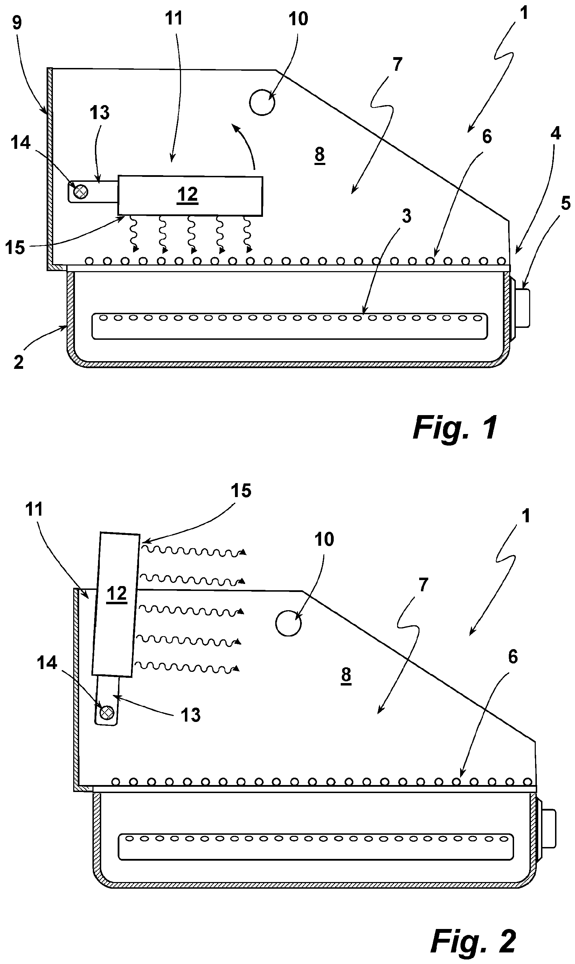

In Figur 1 ist die obere Wärmequelle 11 in ihrer ersten Stellung gezeigt, in der diese als Topburner eingesetzt ist. Die Abstrahlrichtung der oberen Wärmequelle 11 ist in Richtung zur Garfläche bzw. dem Rost 6 gerichtet. Erwärmt wird in ein auf dem Rost unterhalb des Brennergehäuses 12 befindliches Lebensmittel von oben. Selbstverständlich ist auch eine gleichzeitige Erwärmung durch einen Betrieb der unteren Wärmequelle möglich.

Die obere Wärmequelle 11 ist, wie in Figur 1 durch einen Pfeil angedeutet, um die Schwenkachse 14 verschwenkbar. Figur 2 zeigt die obere Wärmequelle 11 mit ihrem Brennergehäuse 12 in einer zweiten Stellung, in der die Wärmeabstrahlrichtung in Richtung der Ebene des Rostes 6 erfolgt. In beiden Stellungen ist die obere Wärmequelle 11 gegenüber der Seitenwand 8 arretiert gehalten. Aufgrund des Abstandes des Brennergehäuses 12 mit seiner Wärmeabstrahlfläche 15 von der Schwenkachse 14 befindet sich diese in der in Figur 2 gezeigten Stellung der oberen Wärmequelle mit ihrem mittleren Abschnitt in Bezug auf ihre vertikale Erstreckung in etwa in Höhe der Lageröffnung 10. Ein auf einem Drehspieß gehaltenes Lebensmittel, beispielsweise ein Braten wird in dieser Stellung der oberen Wärmequelle 11, in der diese als Sideburner eingesetzt ist, seitlich erwärmt.

Die Gaszuführung an die obere Wärmequelle 11 erfolgt über einen der beiden Lagerzapfen, mit denen die obere Wärmequelle 11 in einer Seitenwand 8 gelagert ist, der zu diesem Zweck zumindest abschnittsweise als Hohlzapfen ausgeführt ist.

Das in den Figuren dargestellte Ausführungsbeispiel verdeutlicht, dass trotz der unterschiedlichen Garmöglichkeiten, die das Grillgerät 1 bietet, dieses mit einem Minimum an konstruktiven Aufwand möglich ist.

Nicht gezeigt ist in den Figuren, dass dem Grillgerät 1 eine Haube zugeordnet ist, durch die, wenn geschlossen, der Garraum 7 insgesamt abgeschlossen ist.

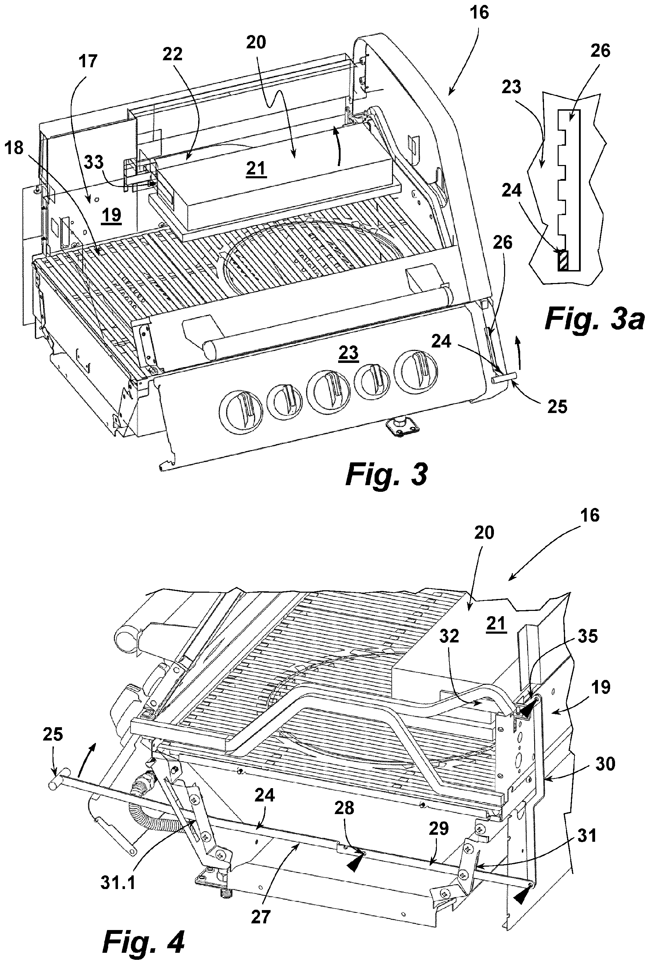

Figur 3 zeigt ein gasbetriebenes Grillgerät 16. Einzelne für die Erläuterung der Erfindung nicht relevante Komponenten bzw. Bauteile des Grillgerätes 16 sind ausgeblendet. Ausgeblendet ist in der Figur 3 beispielsweise der größte Teil einer dem Grillgerät 16 zughörigen Haube sowie das linke Seitenteil ebenso wie der Unterbau. Das Grillgerät 16 verfügt über drei Brennerrohre, die die untere Wärmequelle bilden. Oberhalb dieser Brennerrohre befindet sich ein die Garfläche bereitstellender Rost 18. Die Garkammer 17 ist rückseitig durch eine Rückwand 19 begrenzt. Das Grillgerät 16 verfügt neben der unteren Wärmequelle ebenfalls über eine in unterschiedliche Stellungen schwenkbar verstellbare obere, als Flächenheizer ausgelegte Wärmequelle 20. Die obere Wärmequelle 20 ist in Figur 3 in einer ersten Stellung gezeigt, und zwar in ihrer Topburner-Stellung, in der die von der Wärmeabstrahlfläche abgestrahlte Wärme von oben auf den Rost 18 gerichtet ist. Die Verschwenkbarkeit der oberen Wärmequelle 20 ist in Figur 3 durch einen Pfeil angedeutet.

Bei der oberen Wärmequelle 20 handelt es bei dem dargestellten Ausführungsbeispiel um einen gasbetriebenen IR-Strahler, der von demselben Gasvorrat gespeist wird, an den auch die Brenner der unteren Wärmequelle angeschlossen sind. Die obere Wärmequelle 20 umfasst ein Gehäuse 21, in dem mehrere, quer zu ihrer Flachseite gasdurchströmbare Keramikplatten aufgenommen sind. Bei einem Betrieb bildet die in Figur 3 zu dem Rost 18 weisende Fläche dieser Keramikplatten die Wärmeabstrahlfläche. Die Keramikplatten füllen die Tiefe (in Figur 3 die Höhe) des Gehäuses 21 nicht vollständig aus. Ein rückseitiger Hohlraum innerhalb des Gehäuses 21 und somit rückseitig bezüglich der Wärmeabstrahlfläche der Keramikplatten befindet sich eine Brenngasgemischverteilerkammer, in der nach Art eines Einlaufsammlers der zugeführte Energieträger - ein Brenngas-Luft-Gemisch - über die Fläche der Anströmseite der Keramikplatten verteilt wird. Dieses gewährleistet eine einheitliche Durchströmbarkeit der Keramikplatten und damit ein einheitliches Flammenbild über die gesamte Wärmeabstrahlfläche der oberen Wärmequelle. Innerhalb des Gehäuses können Einbauten bzw. Einsätze vorgesehen sein, die eine Brenngasgemischgleichverteilung auf der Anströmseite der Keramikplatten begünstigen.

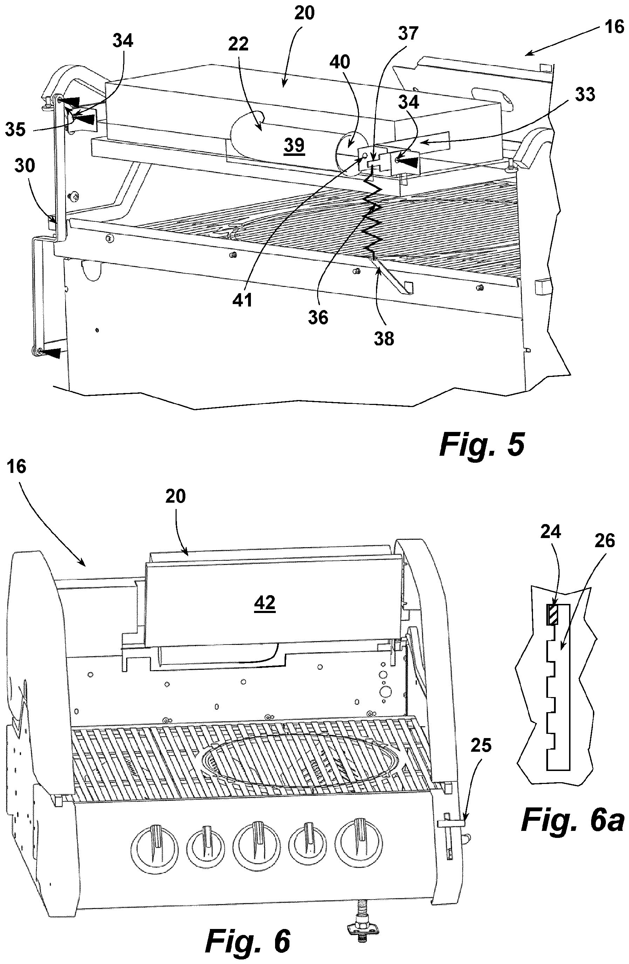

Die obere Wärmequelle 20 erstreckt sich bezüglich ihrer Langachse in Richtung der Breite des Rostes 18 und erstreckt sich bei dem dargestellten Ausführungsbeispiel von der rechten Seitenwand über etwa 75 % der diesbezüglichen Erstreckung des Rostes 18. Der nicht von der oberen Wärmequelle 20 in dieser Richtung wärmebestrahlte Abschnitt des Rostes 18 kann als Warmhaltebereich genutzt werden. Die Brenngasgemischzufuhr erfolgt über ein an die in Figur 3 nicht erkennbare Rückseite des Gehäuses 21 angeschlossenes Mischrohr 22. Die Energieträgerzufuhr wird nachstehend unter Bezugnahme auf die Figur 5 näher beschrieben.

Zum Verstellen der oberen Wärmequelle 20 ist bei dem dargestellten Ausführungsbeispiel ein mechanischer Verstellmechanismus vorgesehen. An der Bedienseite des Grillgerätes 16 ragt aus dem Bedienpanel 23 das freie Ende eines Bedienhebels 24 heraus. An diesem Ende befindet sich eine Griffhandhabe 25. Der Bedienhebel 24 durchgreift das Bedienpanel 23 in einer Rastkulisse 26. Diese ist in Figur 3 schematisiert gezeigt. Figur 3a zeigt in einer detaillierteren Darstellung die in das Bedienpanel 23 eingebrachte Rastkulisse 26. Der Bedienhebel 24 befindet sich in seiner untersten Stellung. Definiert ist dieses durch eine an dieser Position eingebrachte Rastausnehmung. Dieses entspricht der in Figur 3 gezeigten Stellung der oberen Wärmequelle 20. Zum Verstellen der oberen Wärmequelle 20 wird der Bedienhebel 24 aus der jeweiligen Rastausnehmung ausgerückt und dann in der Rastkulisse 26 soweit bewegt, bis die obere Wärmequelle 20 in die gewünschte Stellung verschwenkt worden ist, um anschließend den Bedienhebel 24 in die dieser Stellung entsprechende Rastausnehmung einfedern zu lassen. Die Ausrückbewegung des Bedienhebels 24 erfolgt gegen eine elastische Rückstellkraft, die bei dem dargestellten Ausführungsbeispiel durch die Materialelastizität Bedienhebels 24 selbst bereitgestellt ist.

Der Bedienhebel 24 ist ein erster Arm eines zweiarmigen Hebels 27, dessen Hebelachse in Figur 4 mit dem Bezugszeichen 28 kenntlich gemacht ist. Der zweite Arm 29 des Hebels 27 ist an einen Lenker 30 angeschlossen. Der Lenker 30 befindet sich hinter der Rückwand 19 des Grillgerätes 16. Eine Bewegung des Bedienhebels 24 nach oben, wie in Figur 4 durch einen Pfeil angedeutet, führt zu einer Verstellung des Lenkers 30 nach unten. Der Bedienhebel 24 als erster Arm und der zweite Arm 29 des Hebels 27 sind in entsprechenden Führungen 31, 31.1 in dieser Richtung beweglich geführt.

An das Gehäuse 21 der oberen Wärmequelle 20 sind an die beiden zu den Seitenteilen des Grillgerätes 16 weisenden Wände Schwenkarme 32, 33 (siehe auch Figur 3) angeschlossen. Diese Schwenkarme 32, 33 bilden mit dem Gehäuse 21 eine Einheit und sind starr mit diesem verbunden. Die Schwenkarme 32, 33 durchgreifen die Rückwand 19 und sind an dieser, wie aus Figur 5 ersichtlich, schwenkbar gelagert. Die schwenkbare Anlenkung ist im Detail in den Figuren nicht gezeigt. Die Schwenkachse der Schwenkarme 32, 33 und damit der oberen Wärmequelle 20 ist in Figur 5 mit dem Bezugszeichen 34 kenntlich gemacht. Diese Schwenkachse 34 verläuft aufgrund der Anordnung der gelenkigen Anbindung mit einem gewissen Abstand von dem rückwandseitigen Abschluss des Rostes 18. In Figuren 4 und 5 sind die gelenkigen Verbindungen mit einem Pfeilkopf kenntlich gemacht. Der Lenker 30 ist zum Verstellen der oberen Wärmequelle 20 mit seinem anderen Ende an einen Stellfortsatz 35 angeschlossen, der starr mit dem Schwenkarm 32 verbunden ist. Der Stellfortsatz 35 liegt bezüglich der Schwenkachse 34 der oberen Wärmequelle 20 gegenüber. Eine Verstellung des Lenkers 30 nach unten bewirkt somit ein Verschwenken der oberen Wärmequelle 20 nach oben, um diese aus ihrer in den Figuren 3 bis 5 gezeigten Topburner-Stellung in eine andere Stellung, beispielsweise eine Sideburner-Stellung zu bringen.

Eine solche Verschwenkbewegung der oberen Wärmequelle 20 erfolgt unterstützt durch eine Kraftspeicherelement, welches bei dem dargestellten Ausführungsbeispiel eine Zugfeder 36 ist (siehe Figur 5). Der Einfachheit halber ist in dieser Figur nur eine Zugfeder 36 gezeigt. Durchaus können auch mehrere Zugfedern, auch an beide Schwenkarme 32, 33 angeschlossen, vorgesehen sein. Angeschlossen ist die Zugfeder 36 an einen Zugfederfortsatz 37 als Teil des Schwenkarms 33. Der Zugfederfortsatz 37 liegt der oberen Wärmequelle 20 bezüglich der Schwenkachse 34 gegenüber. Das andere Ende der Zugfeder 36 ist an einem Zugfederarm 38 des Grillgerätes 16 festgelegt. In der in den Figuren 3 bis 5 gezeigten Topburner-Stellung, welches die abgesenkte Stellung der oberen Wärmequelle 20 darstellt, ist die Zugfeder 36 gespannt. Gespannt worden ist die Zugfeder 36 durch eine zuvor erfolgte Absenkbewegung der oberen Wärmequelle 20. Somit ist eine Aufschwenkbewegung der oberen Wärmequelle 20 in ihre Sideburner-Stellung oder in eine Zwischenstellung durch die in der Zugfeder 36 gespeicherte Kraft unterstützt.

Figur 5 zeigt infolge der ausgeblendeten Rückwand 19 das Mischrohr 22. Dieses mündet in das Gehäuse 21 der oberen Wärmequelle 20 in der Mitte ihrer rückwärtigen Seitenwand, und zwar bezogen auf die Längserstreckung bzw. Langachse des Gehäuses 21. Das Mischrohr 22 verfügt über einen Rohrabschnitt 39 mit einer endseitigen Eingangsöffnung 40, deren Längsachse der Schwenkachse 34 entspricht. Damit bleibt die Eingangsöffnung 40 und der sich daran anschließende Rohrabschnitt 39 unabhängig von der Stellung der oberen Wärmequelle 20 ortsfest.

Dem Schwenkarm 33 ist eine Düsenhalterung 41 zugeordnet. An dieser ist eine an den Gasvorrat angeschlossene Brenngasdüse (in den Figuren nicht dargestellt) befestigt. Der Ausgang der Brenngasdüse ragt in die Eingangsöffnung 40 des Mischrohrs 22 hinein. Um die Brenngasdüse verbleibt ein Ringspalt, über den durch die Eingangsöffnung 40 Umgebungsluft bei einem Betrieb der oberen Wärmequelle 20 angesaugt wird. Das Brenngas und die angesaugte Luft werden in dem Mischrohr 22 vermischt, sodass in das Gehäuse 21 ein Brenngas-Luft-Gemisch eintritt. Die Brenngasdüse und ihr Gasanschluss sind der Einfachheit halber in den Figuren nicht gezeigt.

Wird die obere Wärmequelle 20 aus Ihrer in den Figuren 3 bis 5 gezeigten Topburner-Stellung in ihre Sideburner-Stellung verstellt, indem der Bedienhebel 24 mit der daran angebrachten Griffhandhabe 25 innerhalb der Rastkulisse 26 entsprechend verstellt worden ist, befindet sich der Bedienhebel 24 in der obersten Rastausnehmung der Rastkulisse 26. Diese Stellung der oberen Wärmequelle 20 des Grillgerätes 16 ist in Figur 6 gezeigt. Figur 6a zeigt die fixierte Stellung des Bedienhebels 24 innerhalb der Rastkulisse 26.

In den Figuren ist die obere Wärmequelle 20 in ihren beiden Endstellungen gezeigt. Die Rastkulisse 26 weist drei weitere, in Zwischenendstellungen befindliche Rastausnehmungen auf, um die obere Wärmequelle 20 entsprechend ihrer Wärmeabstrahlrichtung geneigt einrichten zu können.

Bei dem in den Figuren dargestellten Ausführungsbeispiel ist die Wärmeabstrahlfläche 42 (siehe Figur 6) der oberen Wärmequelle 20 in ihrer in Figuren 3 bis 5 gezeigten Topburner-Stellung etwa parallel zur Oberseite des Rostes 18 ausgerichtet. Ihre Sideburner-Stellung ist bei dem dargestellten Ausführungsbeispiel nicht um 90° gegenüber der Topburner-Stellung verstellt, sondern um einige Grad weniger. Dieses dient dem Zweck, dass bei dem Grillgerät 16, in dem die obere Wärmequelle 20 eingebaut ist, dieselbe Haube verwendet werden kann, wie bei einer Auslegung dieses Grillgerätes ohne obere Wärmequelle 20.

Das Grillgerät 16 verfügt über eine doppelwandige Rückwand, von der die Rückwand 19 die zur Garkammer 17 weisende Rückwand ist. Die äußere, in den Figuren nicht dargestellte Rückwand bedeckt die in Figuren 4 und 5 erkennbaren, die Rückwand 19 durchgreifenden Komponenten.

Die Erfindung ist anhand von Ausführungsbeispielen erläutert worden. Ohne den Umfang der geltenden Ansprüche zu verlassen, ergeben sich für einen Fachmann zahlreiche weitere Ausgestaltungsmöglichkeiten, ohne dass diese im Rahmen dieser Ausführungen im Einzelnen erläutert werden müssten.

**Bezugszeichenliste**

| | | | |
|---|---|---|---|
| 1 | Grillgerät | 30 | Lenker |
| 2 | Wanne | 31,31.1 | Führung |
| 3 | Brennerrohr | 32 | Schwenkarm |
| 4 | Bedienseite | 33 | Schwenkarm |
| 5 | Drehsteller | 34 | Schwenkachse |
| 6 | Rost | 35 | Stellfortsatz |
| 7 | Garraum | 36 | Zugfeder |
| 8 | Seitenwand | 37 | Zugfederfortsatz |
| 9 | Rückwand | 38 | Zugfederarm |
| 10 | Lageröffnung | 39 | Rohrabschnitt |
| 11 | obere Wärmequelle | 40 | Eingangsöffnung |
| 12 | Brennergehäuse | 41 | Düsenhalterung |
| 13 | Schwenkarm | | |
| 14 | Lagerstange/Schwenkachse | | |
| 15 | Wärmeabstrahlfläche | | |
| 16 | Grillgerät | | |
| 17 | Garkammer | | |
| 18 | Rost | | |
| 19 | Rückwand | | |
| 20 | Wärmequelle | | |
| 21 | Gehäuse | | |
| 22 | Mischrohr | | |
| 23 | Bedienpanel | | |
| 24 | Bedienhebel | | |
| 25 | Griffhandhabe | | |
| 26 | Rastkulisse | | |
| 27 | Hebel | | |
| 28 | Hebelachse | | |
| 29 | Arm | | |

## Patentansprüche

1. Grillgerät mit einer Garfläche, mit zumindest einer unterhalb der Garfläche angeordneten Wärmequelle (3) und mit einer oberhalb der Garfläche angeordneten, als Infrarotstrahler ausgelegten, in unterschiedliche Stellungen verstellbaren oberen, als Flächenheizer ausgelegte Wärmequelle (11, 20), deren Wärmeabstrahlfläche (15, 42) kleiner ist als die Garfläche, von welchen Stellungen der oberen Wärmequelle (11, 20) in einer ersten Abstrahlstellung die Wärmeabstrahlrichtung zur Oberseite der Garfläche zum Erwärmen einen Lebensmittels mit Oberhitze und in einer zweiten Abstrahlstellung in Richtung der flächigen Erstreckung der Garfläche zum Erwärmen eines Lebensmittels aus einer seitlichen Richtung gerichtet ist, **dadurch gekennzeichnet, dass** zur Verstellung der oberen Wärmequelle (11, 20) zwischen den beiden Abstrahlstellungen diese um eine horizontale Schwenkachse (14, 34) verschwenkbar am Grillgerät (1, 16) gehalten ist, welche Verschwenkbarkeit eingerichtet ist, damit infolge einer Verschwenkung der oberen Wärmequelle (11, 20) sowohl ihre Wärmeabstrahlrichtung als auch ihr Abstand zur Garfläche geändert wird.

2. Grillgerät nach Anspruch 1, **dadurch gekennzeichnet, dass** die Schwenkachse (14, 34) der oberen Wärmequelle (11, 20), wenn in die Ebene der Garfläche projiziert, benachbart zu der Garfläche oder im Randbereich der Garfläche angeordnet ist.

3. Grillgerät nach Anspruch 2, **dadurch gekennzeichnet, dass** die Schwenkachse benachbart zu dem der Bedienseite des Grillgerätes (1, 16) gegenüberliegenden Abschluss der Garfläche, insbesondere hinter einer den Garraum (7) rückwärtig begrenzenden Rückwand (19), angeordnet ist.

4. Grillgerät nach Anspruch 3, **dadurch gekennzeichnet, dass** die Schwenkachse (14) der oberen Wärmequelle (11) sich innerhalb der Garkammer (7) befindet und die Schwenkverstellbarkeit der oberen Wärmequelle (11) durch zwei einander bezüglich der Längserstreckung der Schwenkachse (14) gegenüberliegende, jeweils in oder an einer Seitenwand (8) des Grillgerätes (1) gelagerte Lagerzapfen bereitgestellt ist, und dass ein Lagerzapfen zumindest abschnittsweise als Hohlzapfen ausgeführt ist, durch dessen Hohlkanal die für einen Betrieb der oberen Wärmequelle (11) benötigte Energie dieser geführt oder zugeleitet ist.

5. Grillgerät nach einem der Ansprüche 1 bis 4, **dadurch gekennzeichnet, dass** Teil der oberen Wärmequelle (11, 20) zwei in Richtung der Längserstreckung der Wärmequelle (11, 20) voneinander beabstandete Schwenkarme (13; 32, 33) sind, die mit ihrem jeweiligen, der Wärmequelle (11, 20) gegenüberliegenden Endabschnitt an die Schwenkachse (14, 34) angeschlossen sind und durch die die Wärmeabstrahlfläche (15, 42) dieser Wärmequelle (11, 20) somit von der Schwenkachse (14, 34) beabstandet ist.

6. Grillgerät nach einem der Ansprüche 1 bis 5, **dadurch gekennzeichnet, dass** die Verschwenkbarkeit der oberen Wärmequelle (11, 20) in ihren beiden Endstellungen anschlagbegrenzt ist.

7. Grillgerät nach einem der Ansprüche 1 bis 6, **dadurch gekennzeichnet, dass** die obere Wärmequelle (11, 20) in unterschiedlichen Abstrahlstellungen arretierbar ist.

8. Grillgerät nach Anspruch 7, **dadurch gekennzeichnet, dass** zur Arretierung der oberen Wärmequelle in Bezug auf eine Schwenkstellung ein Arretierbolzen vorgesehen ist, dass zumindest eine der Seitenwände, in bzw. an denen die obere Wärmequelle gelagert ist, mit Abstand zur Schwenkachse entlang eines Bogensegmentes mehrere Arretierdurchbrechungen aufweist und dass die obere Wärmequelle über eine Arretierfalle zur Aufnahme eines Endabschnittes des Arretierbolzens verfügt, in die der Arretierbolzen, eine Arretierdurchbrechung der Seitenwand durchgreifend, zur Arretierung der Schwenkstellung der oberen Wärmequelle eintaucht.

9. Grillgerät nach einem der Ansprüche 1 bis 3, **dadurch gekennzeichnet, dass** die obere Wärmequelle ( 20) an zwei in Richtung ihrer Längsachse voneinander beabstandete, verschwenkbar an das Grillgerät (16) angeschlossene Schwenkarme (32, 33) aufweist und dass das Grillgerät (16) mit einem mechanischen Verstellmechanismus, umfassend einen über eine Gelenkkette an zumindest einen Schwenkarm (32, 33) der oberen Wärmequelle (20) angeschlossenen Bedienhebel (24), dergestalt ausgerüstet ist, dass eine Verstellung des Bedienhebels (24) eine Verschwenkbewegung der oberen Wärmequelle (20) bewirkt.

10. Grillgerät nach Anspruch 9, **dadurch gekennzeichnet, dass** der Bedienhebel (24) ein erster Arm (29) eines zweiarmigen Hebels (27) ist, an dessen zweiten Arm (29) mit Abstand zur Hebelachse (28) gelenkig ein Lenker (30) mit seinem einen Ende angeschlossen ist, dessen zweites Ende gelenkig an einen Schwenkarm (32, 33) oder einen Stellfortsatz (35) desselben an einer der oberen Wärmequelle (20) bezüglich der Schwenkachse (34) gegenüberliegenden Position angeschlossen ist.

11. Grillgerät nach Anspruch 9 oder 10, **dadurch gekennzeichnet, dass** ein oder mehrere Kraftspeicherelemente (36) vorgesehen sind, die dergestalt an zumindest ein an die Verschwenkung der oberen Wärmequelle (20) gekoppeltes Bauteil angeschlossen sind, dass eine Absenkbewegung der oberen Wärmequelle (20) in Richtung ihrer Oberhitzestellung gegen die Rückstellkraft des zumindest einen Kraftspeicherelementes (36) erfolgt.

12. Grillgerät nach einem der Ansprüche 9 bis 11, **dadurch gekennzeichnet, dass** die obere Wärmequelle (20) ein Energiezuleitungsrohr mit einem Abschnitt, dessen Längsachse der Raumlage der Schwenkachse (34) der oberen Wärmequelle (20) entspricht oder nur geringfügig gegenüber dieser versetzt ist, angeschlossen ist, über welches Energiezuleitungsrohr der zum Betrieb der oberen Wärmequelle (20) benötigte Energieträger zugeführt wird.

13. Grillgerät nach Anspruch 12, **dadurch gekennzeichnet, dass** die obere Wärmequelle (20) gasbetrieben ist und das Energiezuleitungsrohr als Mischrohr (22) mit einer Eingangsöffnung (40) ausgebildet ist, in die der Ausgang einer Brennerdüse gerichtet ist und durch die die für den Verbrennungsprozess des Brenngases in der oberen Wärmequelle (20) benötigte Luft eingesaugt wird.

14. Grillgerät nach einem der Ansprüche 1 bis 13, **dadurch gekennzeichnet, dass** die obere Wärmequelle (11, 20) ein gasbetriebener IR-Strahler ist.

15. Grillgerät nach Anspruch 14, **dadurch gekennzeichnet, dass** das Grillgerät (1, 16) als untere Wärmequelle (11, 20) über mehrere, quer zur Breite der Bedienseite des Grillgerätes sich erstreckende und unabhängig voneinander betreibbare Brennerrohre (3) verfügt und dass die obere Wärmequelle (11, 20) mit ihrer Längserstreckung quer zu den Brennerrohren (3), zumindest einige derselben überspannend, angeordnet ist.
